# EUROPEAN PATENT SPECIFICATION

(11) **EP 2 337 275 B1**
(45) Date of publication and mention of the grant of the patent: **31.10.2012**
(21) Application number: 09306252.9
(22) Date of filing: 17.12.2009
(51) Int. Cl.: H04L 12/56

(54) **Method of automatically discovering an adjacent network node**
Verfahren zum automatischen Entdecken eines benachbarten Netzwerkknotens
Procédé pour la détection automatique d'un noeud de réseau adjacent

(43) Date of publication of application: 22.06.2011
(73) Proprietor: Alcatel Lucent, 75007 Paris (FR)
(72) Inventor: Puricelli, Paolo Maria, 20040, Caponago (IT); Ciammarughi, Laura, 20040, Caponago (IT)
(74) Representative: Urlichs, Stefan

(56) References cited:
- WO-A2-2009/112929
- US-A1- 2007 237 072
- MICHELE RUTA ET AL: "Semantic-enabled Resource Discovery, Composition and Substitution in 802.11 Pervasive Environments" SEMANTIC COMPUTING, 2009. ICSC '09. IEEE INTERNATIONAL CONFERENCE ON, IEEE, PISCATAWAY, NJ, USA, 14 September 2009 (2009-09-14), pages 503-508, XP031552327 ISBN: 978-1-4244-4962-0

## Description

### Field of the invention

The Invention relates to a method of automatically discovering an adjacent network node.

### Background

According to the Intermediate System - Intermediate System (IS-IS) routing protocol as defined in the standard "ISO/IEC, FDIS 10589: 2001 (E), Information technology - Telecommunications and information exchange between systems - Intermediate System to Intermediate System intra-domain routing information exchange protocol for use in conjunction with the protocol for providing the connectionless-mode network service (ISO 8473)", briefly called ISO 1 0589, network nodes distribute link state messages called Link State Packet Protocol Data Unit (LSP PDU) to other network nodes of the network for distributing routing information. By distributing such LSP PDUs, a network node advertises itself and a list of its adjacent network nodes.

Network nodes receiving link state messages from other network nodes then build a routing table for forwarding data packets based on the information contained in the link state messages. For building such a routing table, the network nodes use an algorithm called Shortest Path First (SPF).

In a packet switched network using the IS-IS routing protocol, a network node discovers an adjacent network node by exchanging handshake messages with the adjacent node via a Point-to-Point link, which connects the network node and the adjacent network node.

According to the standard ISO 10589 and an extension of this standard described in the paper "Network Working Group, Request for Comments: 5303 , Three-Way Handshake for IS-IS Point-to-Point Adjacencies, October 2008", briefly called RFC 5303, a procedure called Three-Way-Handshake is known for discovering an adjacent network node via a Point-to-Point link.

Within such handshake messages, the network nodes discovering each other exchange their network addresses. For this purpose, a handshake message contains a data field into which the network node which sends the message enters its node address. Furthermore, the handshake message contains a data field into which that network node, which sends the message, enters a network address of a discovered neighboring node as an adjacent network node.

The document US 2007/0237072 A1 discloses a method for a resilient internet protocol (IP) ring protocol. A communication device using a resilient IP ring protocol includes a controller that manages operations of a transceiver for exchanging messages in a communication system with adjacent ring nodes in a communication ring architecture . The controller can be programmed to use sub-second level signaling between adjacent ring nodes to determine when adjacent ring nodes have failed and enable failure options upon detection of an adjacent ring-node failure. The publication "Semantic-enabled Resource Discovery, Composition and Substitution in 802.1 Pervasive Environments", by M. Ruta et al., published in "Semantic Computing, 2009, ICSC'09, IEEE International Conference" on 14-16 Sept. 2009, discloses a general framework for resource discovery, composition and substitution in wireless networks. Different knowledge representation techniques are exploited. Discovery information are reused at network layer to build a fully unified discovery and routing framework.

### Summary

According to the invention, a method of automatically discovering an adjacent network node is proposed.

A first network node and a second network node exchange handshake messages. The first network node intends to advertise a pseudo node that is associated with the first network node.

The first network node sends via a link a first handshake message. This first handshake message contains different data fields. One data field indicates the node sending the handshake message. This data field contains the address of the first network node. Another data field indicates a pseudo node, which is associated with the sending node. This data field contains a pseudo node identifier of the pseudo node which is associated with the first network node.

The first network node receives via the link, along which it sent the first handshake message, a second handshake message.

In the case, that the second handshake message contains
- a data field indicating a sending node which sent the second handshake message, wherein this data field contains a node address of another network node,
- a data field which indicates a node, which is adjacent to the sending node that sent the second handshake message, wherein this data field contains the node address of the first network node, and a data field which indicates a pseudo node that is associated with the adjacent network node, wherein this data field contains a pseudo node identifier of the pseudo node associated with the first network node,
the first network node advertises the pseudo node.

By exchanging handshake message via the Point-to-Point link as described above, the network node is able to announce to the other network node, that it intends to activate and advertise a pseudo node, which will be the adjacent neighbor of the other network node via that link. Furthermore, since the first network node activates and advertises the pseudo node only in that case, that the other network node sends back a second handshake message, which contains a data field for carrying the pseudo node identifier of the pseudo node that is to be advertised, the first network node can be sure, that the other network node supports the same protocol of handshake messages. The first network node can thus be sure, that the other network node will discover the pseudo node as its adjacent node via the Point-to-Point link.

This is of advantage, since in the case that the second handshake message does not contain a data field for carrying a pseudo node identifier of a pseudo node that is to be advertised, the first network node refrains from activating and advertising the pseudo node. By doing so, the network node avoids a situation in which the adjacency list of the other network node would contain a false entry in the form of the first network node instead of the pseudo network node.

### Brief description of the drawings

Figure 1 shows two network nodes.
Figure 2 shows the two network nodes and a pseudo network node.
Figure 3 shows handshake messages which are exchanged between the two network nodes.
Figure 4 shows the two network nodes and two pseudo network nodes.
Figure 5 shows handshake messages which are exchanged between the two network nodes.
Figure 6 shows a handshake message according to the standard ISO 10589.
Figure 7 shows a data field called Variable Length Field.
Figure 8 shows a data field called Value Field, as proposed in the paper RFC 5303.
Figure 9 shows a data field containing pseudo node identifiers.
Figure 10 shows a network node.
Figure 11 shows different protocols carried out by different hardware devices of the network node.
Figure 12 shows different protocol carried out by different hardware devices of the network node according to an alternative solution.

### Description of embodiments

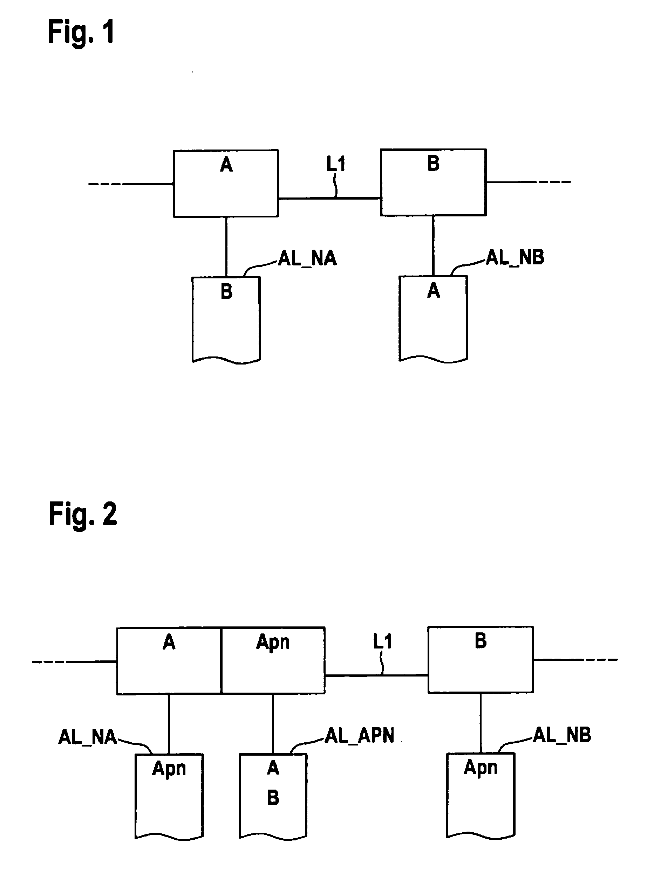

Figure 1 shows two network nodes A and B, which are connected via a link L1. In order to provide correct routing information to other nodes, the nodes A and B have to advertise themselves together with their adjacency lists AL_NA, AL_NB containing the correct respective adjacent nodes. Otherwise, the adjacency lists AL_NA, AL_NB distributed via link state messages would not be congruent, which may lead to mistakes of routing tables determined by other network nodes.

The node A advertises itself together with an adjacency list AL_NA containing as an adjacent node the node B. The node B advertises itself together with an adjacency list AL_NB containing as an adjacent node the node A.

Figure 2 shows the node A and a pseudo node Apn generated by the node A. The pseudo node Apn is located between the node A and the node B. The node A is located at that interface of the node A, to which the link L1 is connected.

The node A intends to activate and advertise the pseudo node Apn to other network nodes of the network, by sending link state messages on behalf of the pseudo network node Apn to other network nodes. Before advertising the pseudo node Apn, the node A has to ensure, that the node B discovers the pseudo node Apn as its adjacent node via the link L1. For the node B, the node A is its neighbor node, but not its adjacent node. For the node B, the pseudo node Apn is its adjacent node. If the node A does not ensure that the node B discovers the pseudo node Apn appropriately as its adjacent node, the adjacency lists distributed via link state messages by the node A and the node B would not be congruent, leading to mistakes of routing tab!es determined by other network nodes.

After the node A has successfully announced the pseudo node Apn to the node B such that the node B discovers the node Apn as its adjacent node, the node B enters the pseudo node Apn into its adjacency list AL_NB. The node A enters the pseudo node Apn into its adjacency list AL_NA. Furthermore, the node A enters the nodes A and B into the adjacency list AL_APN of the pseudo node Apn.

A pseudo network node is identified via a pseudo node address having two components. The first component is the node address of the node that creates the pseudo node. This first component has a length of six bytes. The second component is a pseudo node identifier of the pseudo node, that is associated with the network node that creates the pseudo node. This component has a length of one byte. Therefore, a pseudo node address has a total length of seven bytes.

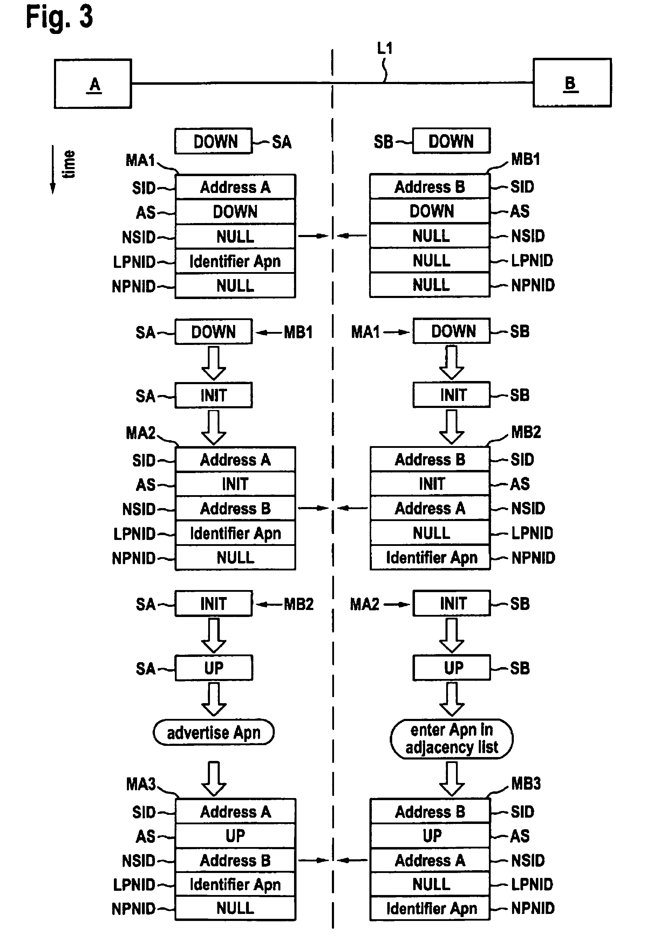

Figure 3 shows the exchange of handshake message between the nodes A and B in the case that the node A intends to advertise the pseudo node Apn, but wants to ensure, that the pseudo node Apn is discovered correctly by the node B. The protocol of message exchange starts at the top of Figure 3 and proceeds in time by moving down.

The node A is in a status SA, in which it has not received, any handshake messages via the link L1. This is indicated by the status SA being marked as DOWN. Also, the node B has not yet received any handshake message via the link L1, therefore the status SB of the node B is also DOWN.

The node A sends via the link L1 a handshake message MA1, which contains different data fields. One data field SID, which identifies the node sending the message, contains the node address of the node A.

A further field AS contains a status identifier, which indicates a status of discovering an adjacent node by the sending node A. Since the node A has not yet received any handshake message via the link L1, the field AS contains the value DOWN.

A further field NSID indicates a neighboring node, that is discovered by the sending node A via the link L1. Since the node A has not yet discovered a neighboring node via the link L1, the field NSID carries the value NULL.

The message MA1 contains a further field LPNID, which indicates a pseudo node that is associated with the node sending the message MA1. Since the node A wants to announce the pseudo node Apn to the node B as an adjacent node, the field LPNID carries the pseudo node identifier of the pseudo node Apn. The pseudo node identifier is chosen to a value different to NULL. In the case, that the node A wants to announce itself to the node B as an adjacent node, the field LPNID carries the value NULL.

A field NPNID contains an identifier of a pseudo node that is associated with that node, which is indicated as a neighboring node in the field NSID. Since no pseudo node associated with a neighboring node has yet been discovered, the field NPNID carries the value NULL.

The node B sends a handshake message MB1 via the link L1. The structure of the message MB1 is equivalent to that of the message MA1. The message MB1 contains in its data field SID the node address of the node B. Since the node B has not yet received any handshake message via the link L1, the data field AS contains the value DOWN. Since the node B has not yet discovered any neighboring node, the data field NSID carries the value NULL. Since the node B does not intend to advertise any pseudo node associated with itself, the data field LPNID carries the value NULL Since the node B has not yet discovered any pseudo node associated with a neighboring node, the data field NPNID carries the value NULL.

The node B receives the message MA1 via the link L1. The reception of this message MA1 causes the node B to change its status SB from the status DOWN to the status INIT. The status INIT is a status, in which the node B has received a handshake message from an adjacent node via the link L1, but has not yet entered the adjacent node into its own adjacency list.

Having reached the status INIT, the node B sends another handshake message MB2 via the link L1. The message MB2 contains within the fields SID and LPNID the same data as the message MB1. The node B enters into the field AS of the message MB2 the value INIT. The node B enters into the data field NSID the node address of the node A. The node B supports the proposed protocol and therefore enters the pseudo node identifier contained in the data field LPNID of the message MA1 into the data field NPNID of the message MB2. Thus, the data field NPNID of the message MB2 contains the pseudo node identifier of the pseudo node Apn.

While the node B receives the message MA1 from the node A, the node A receives the message MB1 from the node B. Upon receiving the message MB1, the node A changes its status SA from DOWN to INIT since the message MB1 contains a data field NPNID for carrying a pseudo node identifier. Then, the node A sends a message MA2 via the link L1. The message MA2 is in principle the counterpart of the message MB2. The message MA2 carries in the data fields SID, LPNID and NPNID the same information as the message MA1. The node A enters into the field AS the value INIT. The node A enters into the field NSID the node address of that neighboring node, which sent the handshake message MB1, Therefore, the node A enters into the field NSIDthe node address of the node B.

While the node A is in the status INIT, the node A receives the message MB2 via the link L1. Since the message MB2 contains
- in the field SID the node address of the node B,
- in the field NSID the node address of the node A, and
- in the field NPNID the pseudo node identifier of the pseudo node Apn,
the node A deduces that the node B has discovered the pseudo node Apn.

Since the message MB2 contains a data field NPNID carrying the pseudo node identifier of the pseudo node Apn associated with the node A, the node A derives from this, that the node B recognizes the pseudo node Apn as its adjacent node. Therefore, the node A can be sure, that the pseudo node Apn has been properly discovered by the node B. Thus, the node A advertises the pseudo node Apn.

Furthermore, the value INIT contained in the field AS of the message MB2 indicates to the node A, that the node B has discovered an adjacent node but has not yet entered the adjacent node into its adjacency list.

The node A changes its status SA from INIT to UP and advertises the pseudo node Apn as a network node located between the node A and the node B. The node A does so, by sending to other network nodes of the network link state message which contain
- a pseudo node address of the pseudo network node, and
- an adjacency indicating the nodes A and B as adjacent nodes.

The pseudo node address contains the node address of the node A and the pseudo node identifier of the pseudo node Apn. The adjacency list contains the node address of the node A and the node address of the node B.

The node A updotes its own adjacency list, by entering the node Apn into its adjacency list, and advertises itself via link state messages containing the updated adjacency list. Haying reached the status UP, the network node A sends a message MA3 via the fink L1. This message MA3 has the same structure as the message, MA2. The message MA3 contains in the fields SID, NSID, LPNID and NPNID the same data as the message MA2. The message MA3 contains in the field AS the value UP. This value UP indicates, that the node A has activated the pseudo node Apn and advertises the pseudo node Apn.

Upon receiving the message MA3, the node B changes its status SB from INIT to UP and
- updates its own adjacency list by entering the node Apn into its adjacency list and
- advertises itself via link state messages containing the updated adjacency list.

Having reached the status UP, the network, node B sends a message MB3 via the link L1. This message MB3 has the same structure as the message MB2. The message MB3 contains in the fields SID, NSID, LPNID and NPNID the same data as the message MB2. The messoge MB3 contains in the field AS the value UP. This value UP indicates, that the node B has discovered the pseudo node Apn and has entered it into its adiacency list.

According to the example shown in Figure 3, the node A changes its status from DOWN to INIT upon receiving the message MB1 containing a data field NPNID for carrying a pseudo node identifier, and from INIT to UP upon receiving the message MB2 containing the data field NPN ID carrying the pseudo node identifier of the pseudo node Apn that is advertise by the node A. The node B changes its status from DOWN to INIT upon receiving the message MA1, and from INIT to UP upon receiving the message MA2. As an alternative solution, the node A may also change its status SA from DOWN straight to UP upon receiving the message MB2 without having previously received the message MB1, while the node B may also change its status SB from DOWN straight to UP upon receiving the message MA2 without having previously received the message MA1.

According to the example shown in Figure 3, the node B supports the proposed protocol for discovering pseudo nodes as adjacent nodes. Therefore, the messages MB1 and MB2 contain the data field NPNID, which contains the pseudo node identifier of the pseudo node Apn.

According to another example, not shown in Figure 3, the node B does not support the proposed protocol for discovering adjacent pseudo nodes via pseudo node identifiers, but only a protocol for discovering real nodes. Thus, the messages MB1, MB2 contain the fields SID, NSID and AS, but not the fields NPNID and LPNID. From the absence of the field NPNID in the messages MB1 and MB2, the node A deduces that the node B does not support the protocol for discovering adjacent pseudo nodes. Thus, the node A knows that the node B is not able to discover the pseudo node Apn as its adjacent neighbor. Therefore, the node A does not advertise the pseudo node Apn to other network nodes. The node A does,also not enter the pseudo node Apn into its adjacency list. From this point on, two further options are possible:
■ The first option is, that the node A itself wants to be discovered by the node B as an adjacent node
■ The second option is, that the node A does not want any node to be discovered by the node B as an adjacent node.

In the case, that the node A itself wants to be discovered as an adjacent node, the node A proceeds as described in the example according to Figure 3, but enters into the field LPNID of the messages MA2 and MA3 the value NULL. This leads to a discovery of the node A as the adjacent node by the node B, since the not will not consider the field LPNID for discovering on adjacent node, but only the field NSID, which contains the node address of the node A. This is due to the fact that the node B does not support the proposed protocol. Therefore, the node B will assume the node A to be the adjacent node.

In the case that the node A does not want any node to be discovered as an adjacent node via the link L1, the node A changes its status SA to DOWN. Then the node A sends a further handshake message equal to the message MA1, which contains the status DOWN, via the link L1. The node B recedes this handshake message. The status DOWN within this received handshake message causes the node B to remain in the status INIT, and not to change its status to UP. Therefore, the node B does not reach the status UP, and therefore the node B does not enter the node A into its adjacency list.

According to an alternative solution, the node avoids a discovery of itself as an adjacent node, by sending a message equal to the message MA1, which contains the status UP, but which additionally contains a data field carrying a Holding Time equal to zero. The Holding Time indicates to the node receiving the message, for which amount of time the received message is valid. By setting the Holding Time to zero, the node B will assume that the received message is valid for zero seconds, and that the status UP is also valid for only zero seconds. This causes the node B to assume, that the node A is in the status UP for only zero seconds and that after that the node A is in the status DOWN.

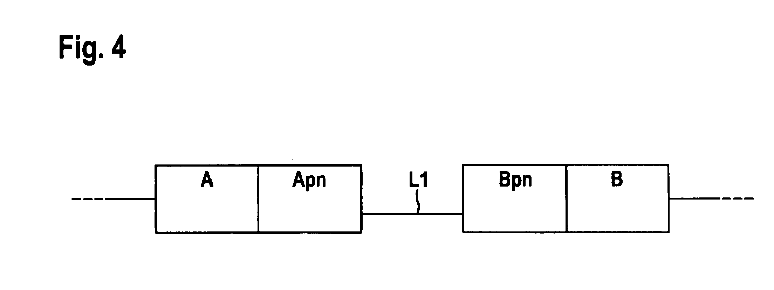

Figure 4 shows the node A, which intends to advertise the pseudo node Apn located between the node A and the link L1, and the nodes which intends to advertise a pseudo node Bpn located between the node B and the link L1.

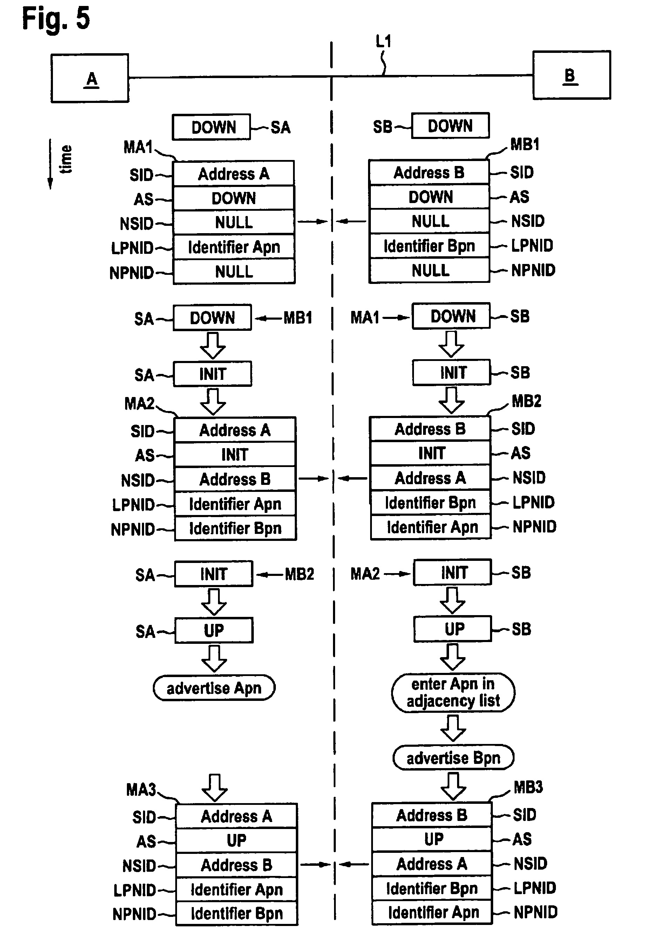

Figure 5 shows an exchange of handshake messages for the scenario gvien in Figure 4. According to Figure 5, both nodes A and B are in the status DOWN, The node A sends a handshake message MA1', which is equivalent to the message MA1 shown in Figure 3. The node B sends a handshake message MB1', which is equivalent to the message MB1 shown in Figure 3, but differs from the message MB1 in that the field LPNID contains the pseudo node identifier of the pseudo node Bpn.

According to Figure 5, the node A receives via the link L1 the message MB1' and changes its status SA from DOWN to INIT. The node A then sends a message MA2' via the link L1, which is equivalent to the message MA2 shown in Figure 3, but differs from the message MA2 in that the data field NPNID carries the pseudo node identifier of the pseudo node Bnp.

The node B receives the message MA1' and changes its status SB from DOWN to INIT. Then, the node B sends a message MB2', which is equivalent to the message MB2 shown in Figure 3, but differs from the message MB2 in that the data field LPNID carries the pseudo node identifier of the pseudo node Bnp.

The node A receives the message MB2' and changes its status SA from INIT to UP. Since the message MB2' contains
- in the field SID the node address of the node B,
- in the field NSID the node address of the node A, and
- a data field NPNID for carrying a pseudo node identifier of the pseudo node
   Apn,
   the node A deduces that the node B has discovered the pseudo node Apn as its adjacent node. From the fact that the message MB2' contains data field NPNID for carrying a pseudo node identifier, the node A deduces that the node B supports the proposed protocol. Thus, the node A decides, that an advertisement of the pseudo node Apn will lead to a discovery of the pseudo node Apn as an adjacent node by the node B.

Then, the node A advertises the pseudo node Apn. Since the message MB2' contains in the field LPNID the pseudo node identifier of the pseudo node Bpn, the node A advertises the pseudo node Apn as a network node located between the node A and the pseudo node Bpn. The node A does so, by sending to other network nodes of the network link state message which contain
- a pseudo node address of the pseudo network node Apn, and
- an adjacency indicating the nodes A and Bpn as adjacent nodes.

Furthermore, the node A enters the pseudo node Apn into its adjacency list.

The node A sends via the link L1 a message MA3', which is equivalent to the message MA3 of Figure 3, but differs from the message MA3 in that the data field NPNID contains the pseudo node identifier of the pseudo node Bnp.

The node B, upon receiving the message MA2', changes its status SB from INIT to UP. Since the message MA2' contains in the field LPNID the pseudo node identifier of the pseudo node Apn, the node B advertises the pseudo node Bpn as a node located between the node B and the pseudo node Apn, The node B does so by distibuting link state messages which contain
- a pseudo node address of the pseudo network node Bpn, and
- an adjacency indicating the nodes Apn and B as adjacent nodes.

Furthermore, the node B enters the pseudo node Bpn into its own adjacency list.

The node B sends via the link L1 a message MA3', which is equivalent to the message MA3 of Figure 3, but differs from the message MA3 in that the data field LPNID contains the pseudo node identifier of the pseudo node Bnp.

According to the example shown in Figure 5, the node A changes its status from DOWN to INIT upon receiving message MB1', and from INIT to UP upon receiving the message MB2'. The node B changes its status from DOWN to INIT upon receiving the message MA1', and from INIT to UP upon receiving the message MA2', As on alternative solution, the node A may also change its status SA from DOWN straight to UP upon receiving the message MB2' without having previously received the message MB1', while the node B may also change its status SB from DOWN straight to UP upon receiving the message MA2' without having previouly received the message MA1',

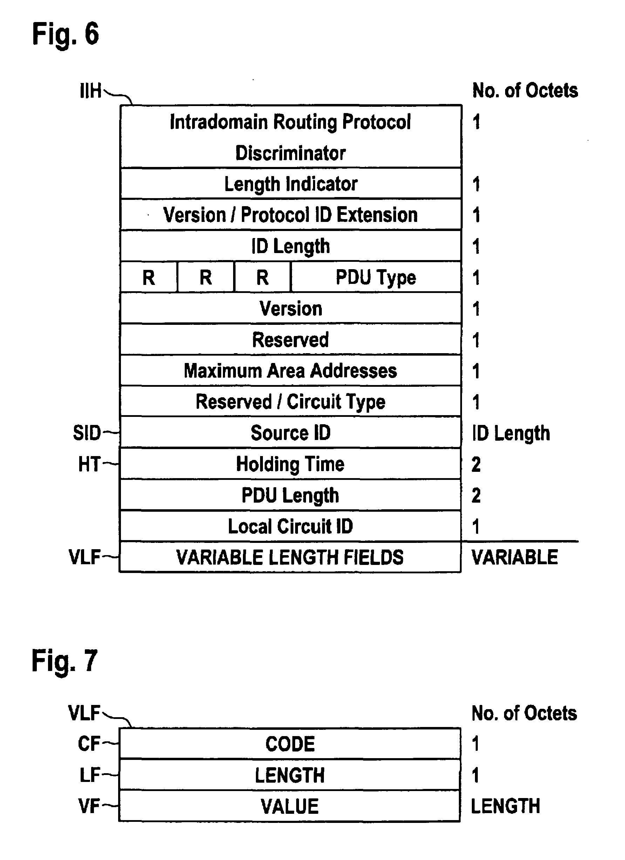

According to a preferred embodiment, the handshake messages that are exchanged between network nodes have a format which will now be explained in more detail With reference to the Figures 6, 7, 8 and 9.

Figure 6 shows a handshake message IIH as known from the standard ISO 10589, Chapter 9.7, The message IIH contains an address-field SID containing the Source ID, which is the network address of the network node sending the message IIH. Furthermore, the message IIH contains a data field HT containing Holding Time, which is the time for which the message IIH shall be considered to be valid by the node receiving the message IIH. The handshake message IIH contains furthermore one or more Variable Length Fields VLF containing further information,

Figure 7 shows the structure of a field called Variable Length Field VLF. A Variable Length Field VLF starts with a code field CF, which contains a code indicating which type of Variable Length Field is given. Furthermore, the Variable Length Field VLF contains a length field LF, which indicates the length of the next following field, which is the value field VF. The volue-field VF contains further information.

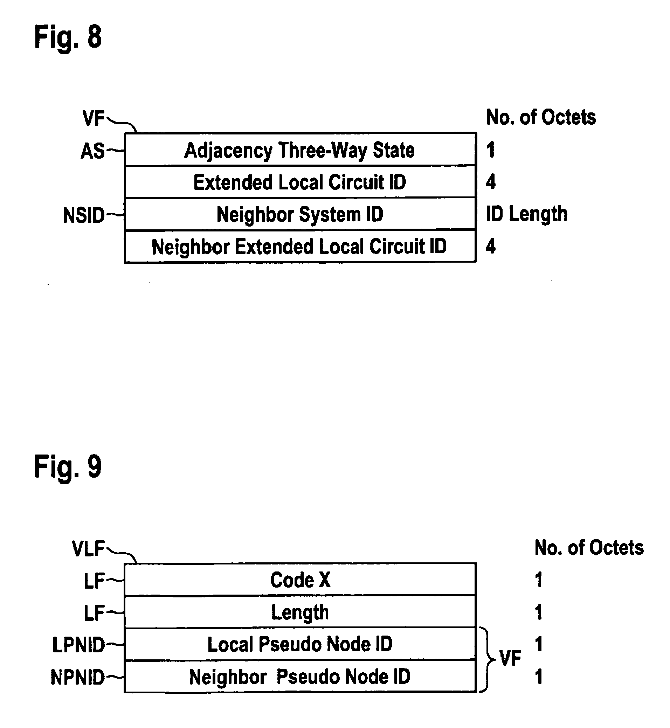

The standard RFC 5303, Chapter 3.1, proposes a Variable Length Field as an extension of an IIH handshake message. Such a Variable Length Field starts with a code field containing as a code the value in hexadecimal 0XF0 which is equivalent to the decimal value 240. The code field is followed by a length field indicating the length of the next field, which is the value field, The proposed value field VF is shown in Figure 8.

According to Figure 8, the value field VF contains a data field AS, which contains a status identifier called Adjacency Three-Way State. This status identifier indicates the status of the node sending the handshake message. The value field VF contains furthermore in a data field NSID an identifier called Neighbor System ID. This identifier indicates a neighboring node, that is discovered by the node sending the handshake message IIH. The field NSID contains the node address of the discovered neighboring node.

Figure 9 shows a further extension of the handshake message IIH by a further Variable Length Field VLF. The Variable Length Field VLF contain a code-field CF, This code field CF contains a code CODEX, which has a certain value identifying the Variable Length Field VLF as a Variable Length Field containing pseudo node identifiers. The variable Length Field VLF contains furthermore a length-field LF indicating the length of a value-field VF.

the value-field VF consists of two data fields LPNID, NPNID. A first data field LPNID contains a pseudo node identifier called Local Pseudo Node ID. This pseudo node identifier identifies a pseudo node that is associated with the node sending the handshake message IIH. A second data field NPNID contains a pseudo node identifier called Neighbor Pseudo Node ID. This pseudo node identifier identifies a pseudo node that is associated with that node, which is declared in the data field NSID of Figure 5 as a neighboring node.

The handshake message IHH having a structure as explained according to the Figure 6, 7, 8 and 9 can be used as handshake messages described in the embodiments according to the Figures 3 and 5.

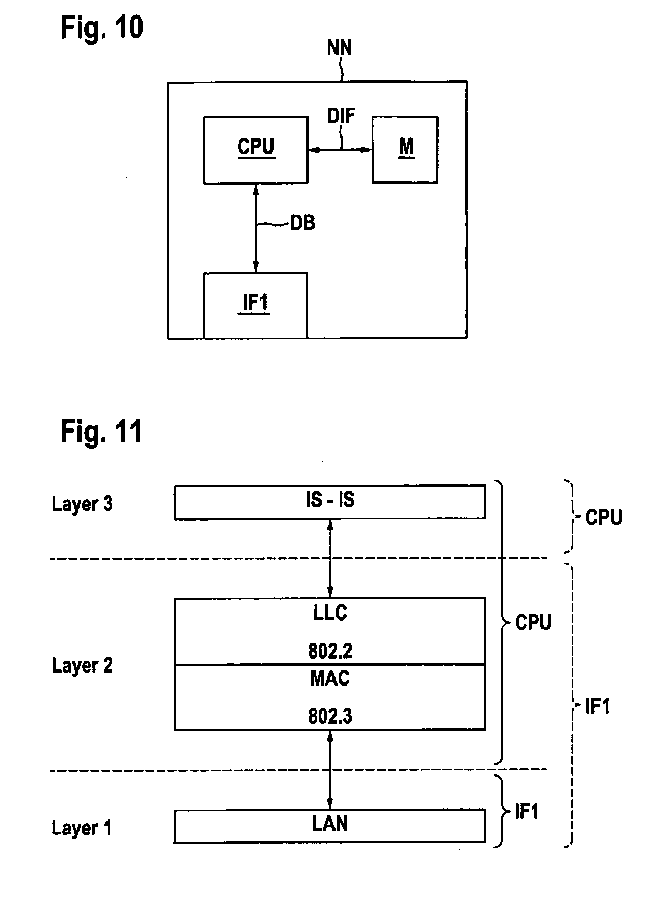

Figure 10 shows a network node NN according to a first embodiment, The network node NN contains a processor CPU and a memory M. The processor CPU and the memory M are connected via a data interface DIF. The network node NN contains an interface I1. The processor CPU and the interface I1 are connected via a data bus DB.

The number of processors contained in the network node is not limited to one processor, there may be multiple processors working in parallel and performing different types of protocols within the network node. Furthermore, more than one memory may be contained in the network node. Further still, the number of interfaces via which the network node is connected to further network nodes is not limited to one but may be larger.

The network node NN is adopted to exchange handshake messages via the interface I1 as described previously above. Furthermore, the network node is adapted to advertise itself or a pseudo node to other network nodes as described previously above, The processor CPU of the network node NN is adopted to generate and send and receive via the interface 11 handshake messages and link state messages via the IS-IS protocol as previously described above. The different functions which are necessary for exchanging handshake messages link skate messages according to the IS-IS protocol will now be described in detail,

Figure 11 shows different protocols of different protocol layers carried out within the network node NN. At the Layer 3, also called Network Protocol Layer, the IS-IS protocol is carried out. This Layer 3 protocols interacts with Layer 2 protocols, which are also called protocols of the Data Link Layer. The highest sublayer of the Data Link Layer is the Logical Link Control protocol according to the standard "IEEE Std 802.2-1998, Information processing systems - Local area networks - Part 2: logical link control, 31 Dec 1989, E-ISBN: 0-7381-4601-3", briefly called LLC. This protocol LLC directly interacts with the protocols of the network protocol layer. Directly below the protocol LLC, there is placed the sublayer of Media Access Control according to the standard "EEE Std 802.3-2008, IEEE Standard for Information technologyTelecommunications and information exchange between systems--local and metropolitan area networks--Specific requirements Part 3: Carrier Sense Multiple Access with Collision Detection (CSMA/CD) Access Method and Physical Layer Specifications - Section Five, 2008, ISBN: 973-07381-5797-9", briefly called MAC. This lower sublayer of the Data Link Layer interacts with the protocol of the Layer 1, which is also called the Physical Layer. At this Physical Layer, a protocol according to the Local Area Network LAN is running, which may be a protocol according to the well known protocol 10base-T. The protocols of the Layer 2, which are the LLC protocol and the MAC protocol, together with the LAN protocol of the Layer 1, are well known as the technology called Ethernet.

Figure 11 furthermore illustrates, indicated by the solid line brackets, which types of protocols are carried out at which hardware within the network node NN. The processor CPU is adapted to run protocols of the Layer 3 and the Layer 2. Via the data bus DB, the processor CPU exchanges signals, with the interface I1. The interface I1 is adapted to run the protocols of the Physical Layer.

Handshake messages and link state messages are exchanged by the IS-IS protocol from the Layer 3 via the Layer 2 and then via the Layer 1.

The IS-IS protocols depicted in Figure 11 running on the processor does not have to run as one single software, but may run on the processor as different processing threads. Furthermore, the different protocols of the Layer 3 and the Layer 2 may run as different processing threads on different processors, which are connected via the data bus DB.

The memory is used by the processor for storing information contained in the handshake messages and the link state messages. The memory dees not necessarily have to be one single memory but may be made up of different memoy elements or memory storage devices to which the processor is connected via a data interface.

According to this embodiment, indicated by the solid line brackets, the processor CPU is adapted to run protocols of the Layer 3 and the Layer 2. The interface IF1 is adapted to run protocols of the Layer 1.

According to an alternative solution, also indicated in Figure 11 by the dashed line brackets, the processor CPU is adopted to run protocols of the Layer 3. The interface IF1 is adapted to run protocols of the Layer 2 and the Layer 1.

The implementation of protocols within the interface IF1 shown in Figure 10, may be given as hardware or as software running on processors comprised within the hardware of the interface IF1.

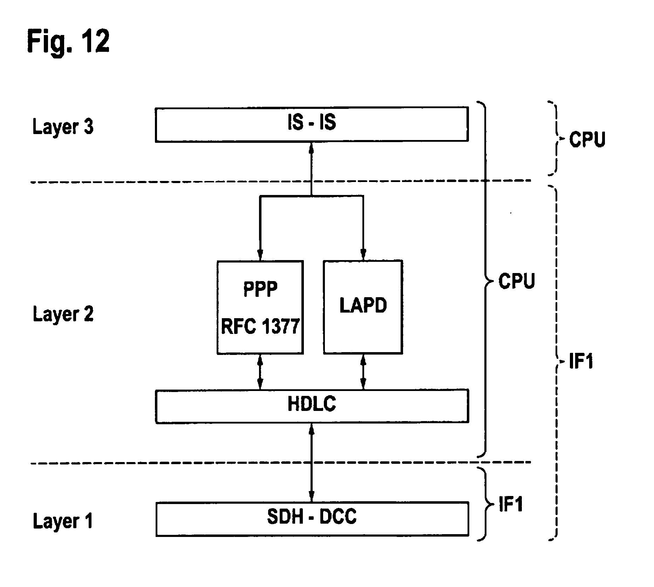

A second embodiment of network protocols running on a network node is shown in Figure 12. In this embodiment, the structure of the network node NN is in general the same as depicted in Figure 10. Figure 12 shows the different protocols which are carried out by different parts of the hardware of the network node NN.

At the Layer 3, the routing protocol IS-IS is carried out.

At the Layer 2, different protocols are carried out for different types of messages received from the Layer 3. Messages originating from the IS-IS protocol are passed on to either the Link Access Procedure for D-Channel LAPD os defined in the paper "ITU-T Recommendation Q.921 (09/97), Digital Subscriber Signaling System No.1- Data Link Layer", briery called Q.921, or to the Point-to-Point Protocol PPP as defined in the paper "Network Working Group, RFC 1377 ∼ The PPP OSI Network Layer Control Protocol (OSINLCP), November 1992", briefly called RFC 1377. From other of these two protocols at the Layer 2, the resulting data is passed on to the next lower sublayer of the Layer 2, which carries out framing of the data according to the protocol of High-Level Data Link Control HDLC.

The HDLC protocol posses the data on to the next lower layer, which is the Layer 1, where the data is then transmitted via the Data Communication Channel DCC of the SDH network to other network nodes.

As indicated in Figure 12 by the solid line brackets, the processor CPU is adapted to run the protocols of the Layer 3 and the Layer 2. Furthermore, the interface H is adapted to run the protocol of the Layer 1.

According to an alternative solution, also indicated in Figure 12 by the dashed line brackets, the processor CPU is adapted to carry out the protocols at the Layer 3, while the interface IF1 is adopted to carry out the protocols at Layer 2 and Layer 1.

The implementation of protocols within the interface IF1 may be given as hardware or as software running on processors comprised within the hardware of the interface IF1.

## Claims

1. Method of automatically discovering an adjacent network node,
wherein a first network node (A) and a second network node (B) exchange handshake messages,
wherein said first network node (A) intends to advertise a pseudo network node (Apn) associated with said first network node (A),
wherein said first network node (a) sends via a link (L1) a first handshake message (MA1) containing
- a first data field (SID) indicating a first sending node, wherein said first data field (SID) contains a network node address of said first network node (A), and
- a second data field (LPNID) indicating a pseudo network node associated with said first sending node, wherein said second data field (LPNID) contains a pseudo network node identifier of said pseudo network node (Apn) associated with said first network node (A),
wherein said first network node (A) receives via said link (L1) a second handshake message (MB2),
wherein, in the case said second handshake message (MB2) contains
- a third data field (SID) indicating a second sending node, wherein said third data field (SID) contains a network node address of said second network node (B),
- a fourth data field (NSID) indicating a node which is a neighbour node to said second sending node, wherein said fourth data field (NSID) contains said network node address of said first network node (A), and
- a fifth data field (NPNID) indicating a pseudo network node associated with said neighbour node, wherein said fifth data field (NPNID) contains said pseudo network node identifier of said pseudo network node (Apn),
said first network node (A) advertises said pseudo network node (Apn).

2. Method according to claim 1,
wherein said first, network node (A) advertises said pseudo network node (Apn) as a network node located between said first network node (A) and said second network node (B).

3. Method according to claim 2,
wherein said first network node (A) advertises said pseudo network node (Apn), by advertising to other network nodes of said network at least one link state message containing
- a pseudo network node address of said pseudo network node (Apn), and
- a list (AL_APN) of network nodes adjacent to said pseudo network node (Apn), wherein said list (AL_APN) contains said network node address of first network node (A) and said network node address of said second network node (B).

4. Method according to claim 3,
wherein said pseudo network node address comprises said network node address of said first network node (A) and said pseudo network node identifier of said pseudo network node (Apn).

5. Method according to claim 4,
wherein said first handshake message (MA1) contains furthermore
- a status identifier indicating that said first sending node (A) has not yet received any Handshake messages via the said link (L1),
and wherein said second handshake message (MB2) contains furthermore
- a status identifier indicating that said second sending node has received a handshake message via said link (L1), but that said second sending node has not yet entered an adjacent node into its on adjacency list.

6. Method according to claim 1 to 5,
wherein said second handshake message (MB2) contains furthermore
- a sixth data field (LPNID) indicating a pseudo network node associated with said second sending node, wherein said sixth data field (LPNID) contains a second pseudo network node identifier of a second pseudo network node (Bpn),
and wherein said first network node (A) generates said pseudo network node (Apn) as a network node located between said first network node (A) and said second pseudo network node (Bpn).

7. Method according to claim 6,
wherein said first network node (A) generates said pseudo network node (Apn), by sending to other network nodes of said network at least one link state message containing
- a pseudo network node address of said pseudo network node (Apn), and
- a list of network nodes adjacent to said pseudo network node (Apn), wherein said list contains said network node address of first network node (A) and said pseudo network node address of said second pseudo network node (Bpn).

8. Network node (NN),
comprising control means configure to advertise a pseudo network node, furthermore comprising an interface (IF1) adapted to generate and send a first handshake message containing
- a first data field indicating a first sending node, wherein said first data field contains a network node address of said first network node (NN), and
- a second data field indicating said pseudo network node associated with said first sending node, wherein said second data field contains a pseudo network node identifier of said pseudo network node,
wherein said interface (IF1) is further adapter to receive a second handshake message,
and wherein said control means are configured to advertise said pseudo network node in the case that said second handshake message contains
- a third data field indicating a second sending node, wherein said third data field contains a network node address of a second network node,
- a fourth data field indicating a node which is a neighbour node to said second sending node, wherein said fourth data field contains said network node address of said network node (NN), and
- a fifth data field indicating a pseudo network node associated with said neighbour node, wherein said fifth data field contains said pseudo network node identifier of said pseudo network node.

## Patentansprüche

1. Verfahren zum automatischen Erkennen eines benachbarten Netzwerkknotens, wobei ein erster Netzwerkknoten (A) und ein zweiter Netzwerkknoten (B) Handshake-Nachrichten austauschen,
wobei der besagte erste Netzwerkknoten (A) beabsichtigt, einen mit dem besagten ersten Netzwerkknoten (A) assoziierten Pseudo-Netzwerkknoten (Apn) anzuzeigen,
wobei der besagte erste Netzwerkknoten (a) über eine Verbindung (L1) eine erste Handshake-Nachricht (MA1) sendet, welche enthält:
- Ein erstes Datenfeld (SID), welches einen ersten sendenden Knoten angibt, wobei das besagte erste Datenfeld (SID) eine Netzwerkknotenadresse des besagten ersten Netzwerkknotens (A) enthält, und
- ein zweites Datenfeld (LPNID), welches einen mit dem besagten ersten sendenden Knoten assoziierten Pseudo-Netzwerkknoten angibt, wobei das besagte zweite Datenfeld (LPNID) eine Pseudo-Netzwerkknotenkennung des besagten mit dem besagten ersten Netzwerkknoten (A) assoziierten Pseudo-Netzwerkknotens (Apn) enthält,
wobei der besagte erste Netzwerkknoten (A) über die besagte Verbindung (L1) eine zweite Handshake-Nachricht (MB2) empfängt,
wobei, wenn die besagte zweite Handshake-Nachricht (MB2) enthält:
- Ein drittes Datenfeld (SID), welches einen zweiten sendenden Knoten angibt, wobei das besagte dritte Datenfeld (SID) eine Netzwerkknotenadresse des besagten zweiten Netzwerkknotens (B) enthält,
- ein viertes Datenfeld (NSID), welches einen Knoten angibt, der ein Nachbarknoten des besagten zweiten sendenden Knotens ist, wobei das besagte vierte Datenfeld (NSID) die besagte Netzwerkknotenadresse des besagten ersten Netzwerkknotens (A) enthält, und
- ein fünftes Datenfeld (NPNID), welches einen mit dem besagten Nachbarknoten assoziierten Pseudo-Netzwerkknoten angibt, wobei das besagte fünfte Datenfeld (NPNID) die besagte Pseudo-Netzwerkknotenkennung des besagten Pseudo-Netzwerkknotens (Apn) enthält,
der besagte erste Netzwerkknoten (A) den besagten Pseudo-Netzwerkknoten (Apn) anzeigt.

2. Verfahren nach Anspruch 1,
wobei der besagte erste Netzwerkknoten (A) den besagten Pseudo-Netzwerkknoten (Apn) als einen zwischen dem besagten ersten Netzwerkknoten (A) und dem besagten zweiten Netzwerkknoten (B) angeordneten Netzwerkknoten anzeigt.

3. Verfahren nach Anspruch 2,
wobei der besagte erste Netzwerkknoten (A) den besagten Pseudo-Netzwerkknoten (Apn) anzeigt, indem er anderen Netzwerkknoten des besagten Netzwerks mindestens eine Verbindungszustandsnachricht anzeigt, welche enthält:
- Eine Pseudo-Netzwerkknotenadresse des besagten Pseudo-Netzwerks (Apn), und
- eine Liste (AL_APN) von mit dem besagten Pseudo-Netzwerkknoten (Apn) benachbarten Netzwerkknoten, wobei die besagte Liste (AL-APN) die besagte Netzwerkknotenadresse des ersten Netzwerkknotens (A) und die besagte Netzwerkknotenadresse des besagten zweiten Netzwerkknotens (B) enthält.

4. Verfahren nach Anspruch 3,
wobei die besagte Pseudo-Netzwerkknotenadresse die besagte Netzwerkknotenadresse des besagten ersten Netzwerkknotens (A) und die besagte Pseudo-Netzwerkknotenkennung des besagten Pseudo-Netzwerkknotens (Apn) umfasst.

5. Verfahren nach Anspruch 4,
wobei die besagte erste Handshake-Nachricht (MA1) weiterhin enthält:
- Eine Zustandskennung, welche angibt, dass der besagte erste sendende Knoten (A) noch keine Handshake-Nachrichten über die besagte Verbindung (L1) empfangen hat,
und wobei die besagte zweite Handshake-Nachricht (MB2) weiterhin enthält:
- Eine Zustandskennung, welche angibt, dass der besagte zweite sendende Knoten eine Handshake-Nachricht über die besagte Verbindung (L1) empfangen hat, aber dass der besagte zweite sendende Knoten noch keinen benachbarten Knoten in seine eigene Nachbarschaftsliste eingetragen hat.

6. Verfahren nach Anspruch 1 bis 5,
wobei die besagte zweite Handshake-Nachricht (MB2) weiterhin enthält:
- Ein sechstes Datenfeld (LPNID), welches einen mit dem besagten zweiten sendenden Knoten assoziierten Pseudo-Netzwerkknoten angibt, wobei das besagte sechste Datenfeld (LPNID) eine zweite Pseudo-Netzwerkknotenkennung eines zweiten Pseudo-Netzwerkknotens (Bpn) enthält,
und wobei der besagte erste Netzwerkknoten (A) den besagten Pseudo-Netzwerkknoten (Apn) als einen zwischen dem besagten ersten Netzwerkknoten (A) und dem besagten zweiten Pseudo-Netzwerkknoten (Bpn) angeordneten Netzwerkknoten erzeugt.

7. Verfahren nach Anspruch 6,
wobei der besagte erste Netzwerkknoten (A) den besagten Pseudo-Netzwerkknoten (Apn) erzeugt, indem er anderen Netzwerkknoten des besagten Netzwerks mindestens eine Verbindungszustandsnachricht sendet, welche enthält:
- Eine Pseudo-Netzwerkknotenadresse des besagten Pseudo-Netzwerkknotens (Apn), und
- eine Liste von mit dem besagten Pseudo-Netzwerkknoten (Apn) benachbarten Netzwerkknoten, wobei die besagte Liste die besagte Netzwerkknotenadresse des besagten ersten Netzwerkknotens (A) und die besagte Pseudo-Netzwerkknotenadresse des besagten zweiten Pseudo-Netzwerkknotens (Bpn) enthält.

8. Netzwerkknoten (NN),
umfassend Steuermittel, die für das Anzeigen eines Pseudo-Netzwerkknotens konfiguriert sind,
weiterhin umfassend eine Schnittstelle (IF1), ausgelegt für das Erzeugen und Senden einer ersten Handshake-Nachricht, welche enthält:
- Ein erstes Datenfeld, welches einen ersten sendenden Knoten angibt, wobei das besagte erste Datenfeld eine Netzwerkknotenadresse des besagten ersten Netzwerkknotens (NN) enthält, und
- ein zweites Datenfeld, welches den besagten mit dem besagten ersten sendenden Knoten assoziierten Pseudo-Netzwerkknoten angibt, wobei das besagte zweite Datenfeld eine Pseudo-Netzwerkknotenkennung des besagten Pseudo-Netzwerkknotens enthält,
wobei die besagte Schnittstelle (IF1) weiterhin für den Empfang einer zweiten Handshake-Nachricht ausgelegt ist,
und wobei die besagten Steuermittel dafür konfiguriert sind, den besagten Pseudo-Netzwerkknoten anzuzeigen, wenn die besagte zweite Handshake-Nachricht enthält:
- Ein drittes Datenfeld, welches einen zweiten sendenden Knoten angibt, wobei das besagte dritte Datenfeld eine Netzwerkknotenadresse eines zweiten Netzwerkknotens enthält,
- ein viertes Datenfeld, welches einen Knoten angibt, der ein Nachbarknoten des besagten zweiten sendenden Knotens ist, wobei das besagte vierte Datenfeld die besagte Netzwerkknotenadresse des besagten Netzwerkknotens (NN) enthält, und
- ein fünftes Datenfeld, welches einen mit dem besagten Nachbarknoten assoziierten Pseudo-Netzwerkknoten angibt, wobei das besagte fünfte Datenfeld die besagte Pseudo-Netzwerkknotenkennung des besagten Pseudo-Netzwerkknotens enthält.

## Revendications

1. Procédé de découverte automatique d'un noeud de réseau adjacent,
dans lequel un premier noeud de réseau (A) et un deuxième noeud de réseau (B) échangent des messages d'établissement de liaison,
dans lequel ledit premier noeud de réseau (A) a pour but d'annoncer un pseudo noeud de réseau (Apn) associé audit premier noeud de réseau (A),
dans lequel ledit premier noeud de réseau (a) envoie par l'intermédiaire d'une liaison (L1) un premier message d'établissement de liaison (MA1) contenant
- un premier champ de données (SID) indiquant un premier noeud d'envoi, dans lequel ledit premier champ de données (SID) contient une adresse de noeud de réseau dudit premier noeud de réseau (A), et
- un deuxième champ de données (LPNID) indiquant un pseudo noeud de réseau associé audit premier noeud d'envoi, dans lequel ledit deuxième champ de données (LPNID) contient un identifiant de pseudo noeud de réseau dudit pseudo noeud de réseau (Apn) associé audit premier noeud de réseau (A),
dans lequel ledit premier noeud de réseau (A) reçoit par l'intermédiaire de ladite liaison (L1) un deuxième message d'établissement de liaison (MB2),
dans lequel, dans le cas où ledit deuxième message d'établissement de liaison (MB2) contient
- un troisième champ de données (SID) indiquant un deuxième noeud d'envoi, dans lequel ledit troisième champ de données (SID) contient une adresse de noeud de réseau dudit deuxième noeud de réseau (B),
- un quatrième champ de données (NSID) indiquant un noeud qui est un noeud voisin audit deuxième noeud d'envoi, dans lequel ledit quatrième champ de données (NSID) contient ladite adresse de noeud de réseau dudit premier noeud de réseau (A), et
- un cinquième champ de données (NPNID) indiquant un pseudo noeud de réseau associé audit noeud voisin, dans lequel ledit cinquième champ de données (NPNID) contient ledit identifiant de pseudo noeud de réseau dudit pseudo noeud de réseau (Apn),
ledit premier noeud de réseau (A) annonce ledit pseudo noeud de réseau (Apn).

2. Procédé selon la revendication 1,
dans lequel ledit premier noeud de réseau (A) annonce ledit pseudo noeud de réseau (Apn) comme un noeud de réseau situé entre ledit premier noeud de réseau (A) et ledit deuxième noeud de réseau (B).

3. Procédé selon la revendication 2,
dans lequel ledit premier noeud de réseau (A) annonce ledit pseudo noeud de réseau (Apn), en annonçant à d'autres noeuds de réseau dudit réseau au moins un message d'état de liaison contenant
- une adresse de pseudo noeud de réseau dudit pseudo noeud de réseau (Apn), et
- une liste (AL_APN) de noeuds de réseau adjacents audit pseudo noeud de réseau (Apn) dans lequel ladite liste (AL_APN) contient ladite adresse de noeud de réseau du premier noeud de réseau (A) et ladite adresse de noeud de réseau dudit deuxième noeud de réseau (B).

4. Procédé selon la revendication 3,
dans lequel ladite adresse de pseudo noeud de réseau comprend ladite adresse de noeud de réseau dudit premier noeud de réseau (A) et ledit identifiant de pseudo noeud de réseau dudit pseudo noeud de réseau (Apn).

5. Procédé selon la revendication 4,
dans lequel ledit premier message d'établissement de liaison (MA1) contient en outre
- un identifiant d'état indiquant que ledit premier noeud d'envoi (A) n'a pas encore reçu de messages d'établissement de liaison par l'intermédiaire de ladite liaison (L1),
et dans lequel ledit deuxième message d'établissement de liaison (MB2) contient en outre
- un identifiant d'état indiquant que ledit deuxième noeud d'envoi a reçu un message d'établissement de liaison par l'intermédiaire de ladite liaison (L1), mais que ledit deuxième noeud d'envoi n'a pas encore entré un noeud adjacent dans sa propre liste d'adjacence.

6. Procédé selon la revendication 1 à 5, dans lequel ledit deuxième message d'établissement de liaison (MB2) contient en outre
- un sixième champ de données (LPNID) indiquant un pseudo noeud de réseau associé audit deuxième noeud d'envoi, dans lequel ledit sixième champ de données (LPNID) contient un deuxième identifiant de pseudo noeud de réseau d'un deuxième pseudo noeud de réseau (Bpn).
et dans lequel ledit premier noeud de réseau (A) génère ledit pseudo noeud de réseau (Apn) comme un noeud de réseau situé entre ledit premier noeud de réseau (A) et ledit deuxième pseudo noeud de réseau (B).

7. Procédé selon la revendication 6,
dans lequel ledit premier noeud de réseau (A) génère ledit pseudo noeud de réseau (Apn), en envoyant à d'autres noeuds de réseau dudit réseau au moins un message d'état de liaison contenant
- une adresse de pseudo noeud de réseau dudit pseudo noeud de réseau (Apn), et
- une liste de noeuds de réseau adjacents audit pseudo noeud de réseau (Apn), dans lequel ladite liste contient ladite adresse de noeud de réseau du premier noeud de réseau (A) et ladite adresse de pseudo noeud de réseau dudit deuxième pseudo noeud de réseau (Bpn).

8. Noeud de réseau (NN),
comprenant des moyens de commande configurés pour annoncer un pseudo noeud de réseau, comprenant en outre une interface (IF1) adaptée pour générer et envoyer un premier message d'établissement de liaison contenant
- un premier champ de données indiquant un premier noeud d'envoi, dans lequel ledit premier champ de données contient une adresse de noeud de réseau dudit premier noeud de réseau (NN), et
- un deuxième champ de données indiquant ledit pseudo noeud de réseau associé audit premier noeud d'envoi, dans lequel ledit deuxième champ de données contient un identifiant de pseudo noeud de réseau dudit pseudo noeud de réseau,
dans lequel ladite interface (IF1) est en outre adaptée pour recevoir un deuxième message d'établissement de liaison.
et dans lequel lesdits moyens de commande sont configurés pour annoncer ledit pseudo noeud de réseau au cas où ledit deuxième message d'établissement de liaison contient :
- un troisième champ de données indiquant un deuxième noeud d'envoi, dans lequel ledit troisième champ de données contient une adresse de noeud de réseau d'un deuxième noeud de réseau,
- un quatrième champ de données indiquant un noeud qui est un noeud voisin audit deuxième noeud d'envoi, dans lequel ledit quatrième champ de données contient ladite adresse de noeud de réseau dudit noeud de réseau (NN), et
- un cinquième champ de données indiquant un pseudo noeud de réseau associé audit noeud voisin, dans lequel ledit cinquième champ de données contient ledit identifiant de pseudo noeud de réseau dudit pseudo noeud de réseau.
